# EUROPÄISCHE PATENTSCHRIFT

(11) **EP 2 449 288 B1**
(45) Veröffentlichungstag und Bekanntmachung des Hinweises auf die Patenterteilung: **27.05.2015**
(21) Anmeldenummer: 10729847.3
(22) Anmeldetag: 30.06.2010
(51) Int. Cl.: H02K 7/06, H02K 7/102

(54) **ELEKTROMECHANISCHE LINEARSTELLEINHEIT**
ELECTROMECHANICAL LINEAR ACTUATOR
UNITE ELECTROMECANIQUE DE REGLAGE LINEAIRE

(30) Priorität: 02.07.2009 DE 102009027418
(43) Veröffentlichungstag der Anmeldung: 09.05.2012
(73) Patentinhaber: ZF Friedrichshafen AG, 88038 Friedrichshafen (DE)
(72) Erfinder: HAUSBERG, Andre, 34131 Kassel (DE); WINTJEN, Carsten, 34393 Grebenstein (DE); PFLUEGER, Werner, 34292 Ahnatal (DE)
(86) Internationale Anmeldenummer: PCT/EP2010/059242
(87) Internationale Veröffentlichungsnummer: WO 2011/000850

(56) Entgegenhaltungen:
- WO-A1-2007/024220
- WO-A2-2008/028184
- WO-A2-2008/112363

## Beschreibung

Die Erfindung betrifft eine elektromechanische Linearstelleinheit, umfassend ein Aktuatorgehäuse, welches zumindest zwei elektrische Antriebe aufnimmt, die jeweils bei Betätigung über eine Steuereinrichtung unabhängig voneinander ein je zugehöriges Antriebsmittel je eines Spindeltriebes in Rotation versetzen und damit jeweils eine lineare Stellbewegung des jeweiligen Spindeltriebes hervorrufen, um eine lineare Relativverstellung einer Steuerstange einzuleiten, wobei die zumindest zwei elektrischen Antriebe derart im Aktuatorgehäuse platziert sind, dass die Relativverstellung durch gleichzeitige Betätigung der zumindest zwei elektrischen Antriebe und einer Summe der Stellbewegungen der zugehörigen Spindeltriebe oder durch Betätigung eines einzelnen elektrischen Antriebs und die Stellbewegung des je zugehörigen Spindeltriebes erzeugbar ist. Des Weiteren betrifft die Erfindung ein Verfahren zum Betreiben der elektromechanischen Linearstelleinheit.

Im Bereich von Hubschraubersteuerungen kommen unter anderem Linearstelleinheiten zum Einsatz, über welche Steuereingaben des Piloten ausgehend von Bedienelementen auf Steuerungskomponenten des Hubschraubers übertragen werden können. Bei modernen Steuerungen kommen hierbei vermehrt elektrische Systeme zum Einsatz, durch welche diese Steuersignale elektromechanisch in lineare Stellbewegungen umgesetzt werden. Diese elektromechanischen Linearstelleinheiten sind dabei üblicherweise als redundante Bauteile ausgeführt, um auch im Falle eines Ausfalls einzelner Komponenten einen sicheren Weiterflug und eine anschließende Landung des Hubschraubers zu ermöglichen.

Aus der US 2005/0168084 A1 ist eine elektromechanische Linearstelleinheit bekannt, bei welcher in einem Aktuatorgehäuse zwei elektrische Antriebe platziert sind, die jeweils unabhängig voneinander mehrere Schrauben eines jeweils zugeordneten Spindeltriebes in Rotation versetzen. Dabei wird durch Antrieb und Rotation der Schrauben des ersten Spindeltriebes das Aktuatorgehäuse relativ zu einem umliegenden Gehäuse in linearer Richtung verschoben, während bei Betätigung der Schrauben des zweiten Spindeltriebes über den je zugehörigen elektrischen Antrieb eine Steuerstange linear verschiebbar ist. Die elektrischen Antriebe sind somit derart im Aktuatorgehäuse platziert, dass eine lineare Relatiwerstellung der Steuerstange bezüglich des Gehäuses zum einen durch eine Summe der Stellbewegungen und Stellgeschwindigkeiten beider Spindeltriebe zum anderen aber auch, insbesondere im Falle eines Ausfalls eines der Spindeltriebe, durch einen einzelnen Spindeltrieb erzeugbar ist.

Durch die Aufsummierung der gefahrenen Stellwege und Geschwindigkeiten der einzelnen Spindeltriebe können im Normalbetrieb darzustellende Relativverstellungen der Steuerstange gleichmäßig auf beide Spindeltriebe und elektrische Antriebe verteilt werden. Hierdurch lässt sich eine Halbierung der durch den einzelnen elektrischen Antrieb darzustellenden Stellgeschwindigkeiten und -beschleunigungen erreichen, was letztendlich auch eine Verkleinerung und damit Gewichtsreduzierung des einzelnen elektrischen Antriebes ermöglicht.

Das Dokument WO 2007/024 220 zeigt den nächstliegenden Stand der Technik mit allen Merkmalen des Oberbegriffs von Anspruch 1.

Es ist des Weiteren im Allgemeinen bekannt, dass eine derartige elektromechanische Linearstelleinheit eine Steuereinrichtung aufweist, die entsprechend Steuervorgaben eines Piloten die beiden elektrischen Antriebe betätigt.

Allerdings weist eine elektromechanische Linearstelleinheit des Standes der Technik den Nachteil auf, dass die elektrischen Antriebe über die Steuereinrichtung bei Einwirkung hoher, äußerer Axialkräfte auf die Steuerstange ständig elektrisch anzusteuern sind, um eine eingestellte lineare Position zu halten. Dies kann jedoch im Falle eines Ausfalls eines elektrischen Antriebes dazu führen, dass unerwünschte Relativverstellungen an der Steuerstange auftreten bzw. durch den noch funktionierenden elektrischen Antrieb erzeugte Stellbewegungen durch den Spindeltrieb des ausgefallenen Antriebs ungewollt ausgeglichen werden.

Es ist daher die Aufgabe der vorliegenden Erfindung, eine elektromechanische Linearstelleinheit zu schaffen, bei welcher unerwünschte Stellbewegungen des einzelnen Spindeltriebes zuverlässig verhindert werden können. Zudem soll die Steuereinrichtung der elektromechanischen Linearstelleinheit in der Lage sein, eine derartige Maßnahme im Falle eines Ausfalls einzelner Komponenten steuern können.

Diese Aufgabe wird vorrichtungstechnisch ausgehend von einer elektromechanischen Linearstelleinheit gemäß des Oberbegriffs von Anspruch 1 in Verbindung mit dessen kennzeichnenden Merkmalen gelöst, Verfahrenstechnisch wird die Aufgabe gemäß des Oberbegriffs des Anspruchs 7 in Verbindung mit dessen kennzeichnenden Merkmalen gelöst. Die jeweils sich rückbeziehenden, abhängigen Ansprüchen geben vorteilhafte Weiterbildungen der Erfindung wieder. Bezüglich eines Computerprogrammprodukts zur Ausführung der Erfindung sowie eines Datenträgers zu dessen Speicherung wird auf die Ansprüche 9 und 10 verwiesen.

Die Erfindung umfasst die technische Lehre, dass im Bereich jedes der zumindest zwei elektrischen Antriebe jeweils eine Bremse vorgesehen ist, die über die Steuereinrichtung gezielt betätigbar ist und dabei eine Stellbewegung des jeweiligen Spindeltriebes unterbindet. Folglich wird der jeweilige Spindeltrieb in der eingestellten Position gehalten, ohne dass bei hohen, äußeren Axialkräften eine ständige Ansteuerung des jeweiligen elektrischen Antriebs vorzuliegen hat. Des Weiteren kann auch bei Ausfall eines der Spindeltriebe die geforderte Relativverstellung der Steuerstange über den noch funktionstüchtigen Spindeltrieb ausgeführt werden, wobei unerwünschte Stellbewegungen des fehlerhaften Spindeltriebs durch die aktivierte Bremse wirksam ausgeschlossen werden können. Folglich wird insgesamt die Betriebssicherheit der elektromechanischen Linearstelleinheit erhöht.

Gemäß einer Ausführungsform der Erfindung weisen die zumindest zwei elektrischen Antriebe jeweils einen Elektromotor auf, welcher jeweils über eine je zugehörige Antriebswelle bei Betätigung über die Steuereinrichtung eine zugeordnete Spindelmutter des jeweiligen Spindeltriebes in Rotation versetzt, wobei die zugeordnete Bremse bei Betätigung die zugehörige Antriebswelle arretiert. Vorteilhafterweise kann hierdurch eine sehr kompaktbauende elektromechanische Linearstelleinheit verwirklicht werden, bei welcher unzulässige Stellbewegungen der einzelnen Spindeltriebe durch Ausbilden einer kraftschlüssigen Verbindung zwischen der jeweiligen Bremse und der zugehörige Antriebswelle zuverlässig verhindert werden können.

In Weiterbildung der Erfindung sind die zumindest zwei elektrischen Antriebe im Einzelnen über einen je zugehörigen Steuerzweig der Steuereinrichtung betätigbar sind, der im Einzelnen jeweils über Sensormittel verfügt und mit einer Hauptsteuereinheit in Verbindung steht. Dies hat den Vorteil, dass die Antriebe somit über unabhängig voneinander agierende Steuerzweige geregelt werden, die nur der Hauptsteuereinheit untergeordnet sind. Somit haben auftretende Fehler in einem Steuerzweig und bei einem elektrischen Antrieb keinen negativen Einfluss auf einen benachbarten Antrieb. Dabei werden innerhalb jedes Steuerzweiges die durch die je zugehörigen Sensormittel erfassten Messdaten miteinander abgeglichen, sowie leistungsführende Bauteile überwacht, wobei im Falle einer Fehlerdetektion die Bremse des je zugehörigen elektrischen Antriebs betätigt wird. Folglich können auftretende Fehler frühzeitig erkannt und hiermit einhergehende, nicht erwünschte Stellbewegungen durch Betätigen der jeweiligen Bremse zuverlässig unterbunden werden.

Es ist eine weitere, vorteilhafte Ausführungsform der Erfindung, dass die Sensormittel jeweils durch je einen Linearsensor zur Detektion einer linearen Position einer Spindelstange des je zugehörigen Spindeltriebes und je einen Rotationssensor zur Erfassung einer Winkelposition des je zugehörigen elektrischen Antriebes gebildet sind. Durch Vorsehen eines Rotationssensors im Bereich des jeweiligen elektrischen Antriebs kann dieser auf einfache und gleichzeitig zuverlässige Art und Weise durch den jeweiligen Steuerzweig geregelt werden. Des Weiteren kann durch Abgleich der Messdaten mit den durch den Linearsensor erfassten Stellwegen des jeweils zugehörigen Spindeltriebes auf Fehler rückgeschlossen werden. Denn anhand der gemessenen Rotation des elektrischen Antriebs kann eine theoretische Stellbewegung an der Spindelstange des je zugehörigen Spindeltriebes ermittelt und mit den tatsächlich durch den Linearsensor erfassten Weg abgeglichen werden.

Entsprechend einer weiteren Ausführungsform der Erfindung ist jeder Steuerzweig durch eine ACU und eine PCU gebildet, wobei die jeweilige ACU den zugehörigen elektrischen Antrieb und den jeweiligen Spindeltrieb mittels der Sensormittel überwacht, während die jeweilige PCU den je zugehörigen elektrischen Antrieb und die jeweilige Bremse nach Vorgaben der zugehörigen ACU ansteuert. Mit der Abkürzung ACU ist hierbei eine Actuator Control Unit zur Überwachung des jeweiligen Teils der Stelleinheit und mit der Abkürzung PCU eine Power Control Unit zur Ansteuerung der elektrischen Komponenten dieses Teils gemeint. Dies hat den Vorteil, dass die Aufteilung in Regelung und Überwachung einerseits und Ansteuerung andererseits die Fehleranfälligkeit des jeweiligen Steuerzweigs reduziert.

In Weiterbildung der Erfindung unterbindet die jeweils zugeordnete Bremse im unbestromten Zustand die Stellbewegung des jeweiligen Spindeltriebes. Hierdurch wird gewährleistet, dass im Fall einer Unterbrechung der Stromversorgung der Steuerung unzulässige Stellbewegungen des jeweiligen Spindeltriebes unterbunden werden und somit ein sicherer Flugbetrieb gewährleistet ist.

Es ist eine Ausgestaltung der Erfindung, dass im Fall der Fehlerdetektion durch die Hauptsteuereinheit modifizierte Regelvorgaben an die noch fehlerfrei arbeitenden Steuerzweige übermittel werden, um trotz des Fehlers eine geforderte Relativverstellung der Steuerstange zu erzielten. In diesem Fall wird also die Regelung derart umgestellt, dass die geforderte Stellbewegung durch den noch fehlerfrei arbeitenden elektrischen Antrieb mittels des zugehörigen Spindeltriebs erzeugt wird. Folglich wird die Funktionstüchtigkeit der Linearstelleinheit auch bei Ausfall einzelner Komponenten gewährleistet.

Die erfindungsgemäße Lösung lässt sich auch als Computerprogrammprodukt verkörpern, welches, wenn es auf den Prozessoren der Hauptsteuereinheit und der Steuerzweige läuft, die Prozessoren softwaremäßig anleitet, die zugeordneten erfindungsgegenständlichen Verfahrensschritte durchzuführen.

In diesem Zusammenhang gehört ein computerlesbäres Medium zum Gegenstand der Erfindung, auf dem ein vorstehend beschriebenes Computer-programmprodukt abrufbar gespeichert ist.

Weitere, die Erfindung verbessernde Maßnahmen werden nachstehend gemeinsam mit der Beschreibung eines bevorzugten Ausführungsbeispiels der Erfindung anhand einer Figur näher dargestellt.

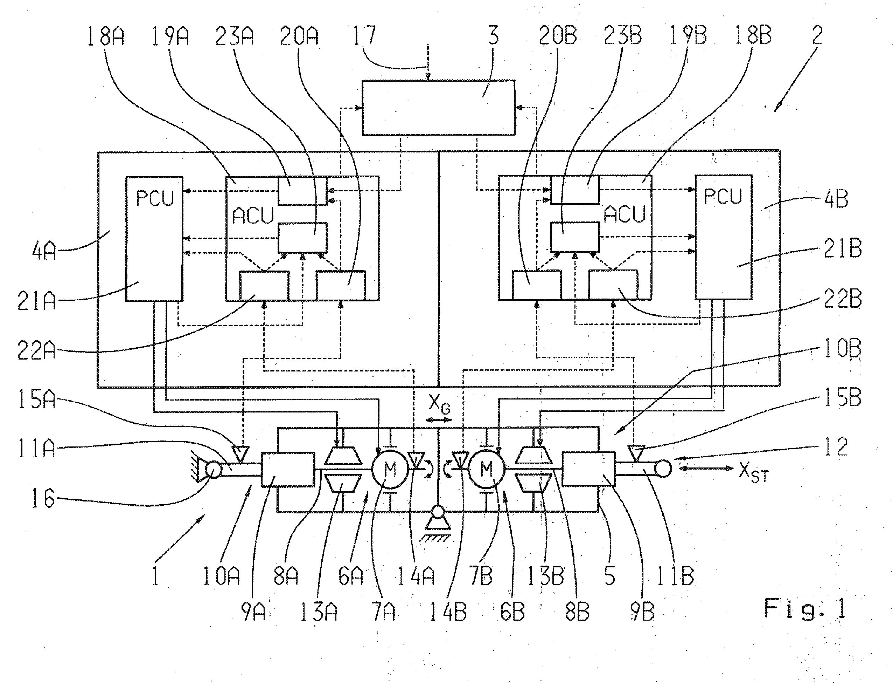

Die einzige Fig. zeigt eine schematische Ansicht der erfindungsgemäßen elektromechanischen Linearstelleinheit. Diese besteht aus einem Aktuatorteil 1 und einer Steuereinrichtung 2, welche den Aktuatorteil 1 regelt und überwacht und sich aus einer Hauptsteuereinheit 3, sowie zwei hieran angegliederten Steuerzweigen 4A und 4B zusammensetzt.

Der Aktuatorteil 1 verfügt über ein Aktuatorgehäuse 5, in welchem zwei elektrische Antriebe 6A und 6B platziert sind. Diese elektrischen Antriebe 6A und 6B setzen jeweils aus einem Elektromotor 7A und 7B zusammen, welche im Einzelnen jeweils über eine zugehörige Antriebswelle 8A und 8B eine je zugehörige Spindelmutter 9A und 9B eines jeweils zugeordneten Spindeltriebes 10A und 10B in Rotation versetzen. Durch diese Rotation der Spindelmuttern 9A und 9B wird eine lineare Stellbewegung jeweils zugehöriger Spindeistangen 11A und 11B hervorgerufen. Hierbei bildet die Spindelstange 11B gleichzeitig auch eine Steuerstange 12 der erfindungsgemäßen elektromechanischen Linearstelleinheit aus, über welche bei Betätigung des Aktuatorteils 1 über die Steuereinrichtung 2 Linearstellaufgaben in, dem Fachmann bekannten Bereichen eines Hubschraubers übernommen werden. Des Weiteren ist sowohl im Bereich der Antriebswelle 8A als auch im Bereich der Antriebeswelle 8B der elektrischen Antriebe 6A und 6B jeweils eine Bremse 13A und 13B vorgesehen, welche jeweils im unbestromten Zustand mit der je zugehörigen Antriebswelle 8A oder 8B in Kontäkt treten und deren Rotation unterbinden. Schließlich weist der Aktuatorteil 1 Sensormittel in Form von Rotationssensoren 14A und 14B zur Erfassung einer Winkelposition der jeweils zugehörigen Elektromotoren 7A und 7B, sowie Linearsensoren 15A und 15B zur Detektion der linearen Position der je zugeordneten Spindelstange 11 A oder 11 B auf.

Wird nun die Spindelmutter 9A durch den Elektromotor 7A mittels der Antriebswelle 8A in Rotation versetzt, so wird durch die über den Spindeltrieb 10A hervorgerufene Stellbewegung das Aktuatorgehäuse 5 relativ zu einem Gehäuse 16 linear um einen Stellweg x_{G} verschoben. Dabei entspricht dieser Stellweg x_{G} in diesem Moment auch einer linearen Relativverstellung der Steuerstange 12 bezüglich des Gehäuses 16. Mittels der zusätzlichen Betätigung des Elektromotors 7B und dem damit verbundenen Antrieb der Spindelmutter 9B wird allerdings die Steuerstange 12 zusätzlich relativ zum Aktuatorgehäuse 5 verschoben und damit, eine gegensinnige Rotation der Elektromotoren 7A und 7B bzw. eine gegensätzliche Steigrichtung der Spindeltriebe 10A und 10B vorausgesetzt, eine Relativverstellung der Steuerstange 12 bezüglich des Gehäuses 16 verstärkt, wodurch ein Gesamtstellweg x_{St} erreicht wird.

Der Hauptsteuereinheit 3 wird über einen Signaleingang 17 ein einzustelIender Stellweg mitgeteilt. Dieser einzustellende-Sollweg-wird daraufhin im Normalbetrieb durch die Hauptsteuereinheit 3 in zwei gleich große Teile aufgeteilt und über Datenleitungen ACUs (Aktuator Control Units) 18A und 18B der Steuerzweige 4A und 4B zugeführt. Innerhalb-jeder ACU 18A und 18B wird dieses Signal in einen Regler 19A und 19B eingespeist und gemeinsam mit einer Ist-Position der jeweiligen Spindelstange 11A oder 11 B verarbeitet. Diese Ist Position wird den Reglern 19A und 19B dabei über jeweils eine Auswerteeinheit 20A und 20B zugeführt, die jeweils die Signale der Linearsensoren 15A und T5B auswerten. Anhand dieser zur Verfügung gestellten Daten kalkulieren die Regler 19A und 19B jeweils eine zu erzeugende Stellgeschwindigkeit der je zugehörigen Elektromotoren 7A und 7B und übermitteln diese an PCUs (Power Control Units) 21 A und 21 B der jeweiligen Steuerzweige 4A und 4B. Diese PCUs 21 A und 21 B stehen über Stromleitungen mit den jeweils zugeordneten Elektromotoren 7A bzw. 7B und den zugehörigen Bremsen 13A und 13B in Verbindung und regeln deren Stromzufuhr. Anhand der durch den jeweiligen Regler 19A oder 19B übermittelten Sollgeschwindigkeit regeln die PCUs 21 A und 21 B die Stromzufuhr zu den Elektromotoren 7A und 7B derart, dass die letztgenannten die geforderten Geschwindigkeit erreichen. Um hierbei die korrekte Geschwindigkeit einstellen zu können, werden den PCUs 21 A und 21 B die aktuellen Winkelpositionen des jeweils zu betätigenden Elektromotors 7A und 7B über Auswerteeinheiten 22A und 22B zugeführt, die die Daten der Rotationssensoren 14A und 14B auswerten. Die Bremsen 13A und 13B werden hingegen mit einem gleichbleibenden Strom versorgt um sie in der Öffnungsstellung zu halten. Ab bestimmten Positionen der zugehörigen Spindelstangen 10A und 10B werden die Sollgeschwindigkeiten über die Regler 19A und 19B zurückgefahren, bis schließlich bei Erreichen des gewünschten Gesamtstellwegs x_{St} an der Steuerstange 12 die Stromversorgung der Elektromotoren 7A und 7B durch die PCUs 21 A und 21 B unterbrochen wird und die Bremsen 13A und 13B durch ebenfalls Unterbrechen der Stromversorgung geschlossen werden.

Während der gesamten Stellbewegung werden die durch die Auswerteeinheiten 20A und 20B erfassten Linearpositionen der Spindelstangen 10A und 10B mit den durch die Auswerteeinheiten 22A und 22B erfassten Winkelpositionen der Elektromotoren 7A und 7B verglichen. Dies geschieht in Überwachungseinheiten 23A und 23B, die in der jeweiligen ACU 18A und 18B vorgesehen sind und anhand der erfassten Daten der einen Sensoren 14A und 14B oder 15A und 15B theoretische Werte für die jeweils anderen Sensoren 14A und 14B bzw. 15A und 15B ermitteln und mit den tatsächlich erfassten vergleichen. Dabei sind physikalische Effekte wie innerhalb der Mechanik vorhandene Nachgiebigkeiten und Hysteresen in einem zugehörigen Modell in den jeweiligen Überwachungseinheiten 23A und 23B hinterlegt. Wird durch die jeweilige Überwachungseinheit 23A öder 23B eine erhebliche Abweichung zwischen dem theoretisch ermittelten Wert und dem tatsächlich gemessenen festgestellt, so wird die jeweils zugehörige PCU 21A oder 21B angewiesen, die Stromzufuhr zu der jeweiligen Bremse 13A oder 13B, sowie dem jeweiligen Elektromotor 7A oder 7B zu unterbrechen und die Bremse 13A oder 13B somit zum Schließen zu bringen.

Des Weiteren wird der aktuelle Betriebsstatus durch die PCUs 21A und 21 B an die Überwachungseinheiten 23A und 23B der jeweils zugehörigen A-CUs 18A oder 18B übermittelt. Werden in der jeweiligen PCU 21 A oder 21 B die Sollwerte der geforderten Stromregelung nicht erreicht, beispielsweise durch Ausfall eines leistungsschaltenden Bauteils oder einen Kurzschluss in einem der Elektromotoren 7A oder 7B, so wird an die jeweils zugehörige Überwachungseinheit 23A oder 23B der zugeordneten ACU 18A oder 18B ein Fehlersignal übermittelt. Diese Überwachungseinheit 23A oder 23B erzwingt in diesem Moment die Stromunterbrechung innerhalb der jeweiligen PCU 21 A oder 21 B zu der zugehörigen Bremse 13A bzw. 13B, sowie dem Elektromotor 7A bzw. 7B. Dies führt erneut zu einem Schließen der jeweiligen Bremse 13A oder 13B.

Hat eine Aktivierung der Bremsen 13A oder 13B stattgefunden so wird dies durch die jeweilige AGU 18A oder 18B des Leistungszweiges 4A bzw. 4B der Hauptsteuereinheit 3 mitgeteilt. Diese variiert daraufhin den Sollstellweg für den noch funktionstüchtigen Leistungszweig 4A bzw. 4B, so däss über den jeweiligen elektrischen Antrieb 6A oder 6B der geforderte Gesamtstellweg x_{St} erreicht werden kann. Dabei wird eine Verstellung allerdings aufgrund der verminderten Leistung mit einer reduzierten Dynamik vorgenommen, weswegen höherfrequente Eingaben über den Dateneingang 17 nicht umgesetzt werden können, eine Fortführung des Fluges mit anschließender sicherer Landung aber gewährleistet ist.

Mittels der erfindungsgemäßen elektromechanischen Linearstelleinheit ist es somit möglich, im Falle eines Ausfalls einer der Steuerzweige 4A oder 4B dennoch eine Einstellung des geforderten Gesamtstellweges x_{St} zu erreichen, ohne das ungewollte Stellbewegungen durch den fehlerhaften Spindeltrieb 10A oder 10B auftreten können.

### Bezugszeichen

- 1: Aktuatorteil
- 2: Steuereinrichtung
- 3: Hauptsteuereinheit
- 4A, 4B: Steuerzweige
- 5: Aktuartorgehäuse
- 6A, 6B: elektrische Antriebe
- 7A, 7B: Elektromotoren
- 8A, 8B: Antriebswellen
- 9A, 9B: Spindelmuttern
- 10A, 10B: Spindeltriebe
- 11A, 11B: Spindelstangen
- 12: Steuerstange
- 13A, 13B: Bremsen
- 14A, 14B: Rotationssensoren
- 15A, 15B: Linearsensoren
- 16: Gehäuse
- 17: Dateneingang
- 18A, 18B: ACUs
- 19A, 19B: Regler
- 20A, 20B: Auswerteeinheiten Linearpositionen
- 21A, 21B: PCUs
- 22A, 22B: Auswerteeinheiten Winkelpositionen
- 23A, 23B: Überwachungseinheiten

- x_{G}: Stellweg Aktuatorgehäuse
- x_{St}: Gesamtstellweg

## Patentansprüche

1. Elektromechanische Linearstelleinheit, umfassend ein Aktuatorgehäuse (5), welches zumindest zwei elektrische Antriebe (6A, 6B) aufnimmt, die jeweils bei Betätigung über eine Steuereinrichtung (2) unabhängig voneinander ein je zugehöriges Antriebsmittel je eines Spindeltriebes (10A, 10B) in Rotation versetzen und damit jeweils eine lineare Stellbewegung des jeweiligen Spindeltriebes (10A, 10B) hervorrufen, um eine lineare Relativverstellung einer Steuerstange (12) einzuleiten, wobei die zumindest zwei elektrischen Antriebe (6A, 6B) derart im Aktuatorgehäuse (5) platziert sind, dass die Relativverstellung durch gleichzeitige Betätigung der zumindest zwei elektrischen Antriebe (6A, 6B) und einer Summe der Stellbewegungen der zugehörigen Spindeltriebe (10A, 10B) oder durch Betätigung eines einzelnen elektrischen Antriebs (6A; 6B) und die Stellbewegung des je zugehörigen Spindeltriebes (10A; 10B) erzeugbar ist, wobei im Bereich jedes der zumindest zwei elektrischen Antriebe (6A, 6B) jeweils eine Bremse (13A, 13B) vorgesehen ist, die über die Steuereinrichtung (2) gezielt betätigbar ist und dabei die Stellbewegung des je zugehörigen Spindeltriebes (10A, 10B) unterbindet, **dadurch gekennzeichnet, dass** die zumindest zwei elektrischen Antriebe (6A, 6B) jeweils einen Elektromotor (7A, 7B) aufweisen, welcher jeweils über eine je zugehörige Antriebswelle (8A, 8B) bei Betätigung über die Steuereinrichtung (2) eine zugeordnete Spindelmutter (9A, 9B) des jeweiligen Spindeltriebes (10A, 10B) in Rotation versetzt, wobei die je zugeordnete Bremse (13A, 13B) bei Betätigung die zugehörige Antriebswelle (8A, 8B) arretiert.

2. Elektromechanische Linearstelleinheit nach Anspruch 1 oder 2, **dadurch gekennzeichnet, dass** die zumindest zwei elektrischen Antriebe (6A, 6B) im Einzelnen über einen je zugehörigen Steuerzweig (4A, 4B) der Steuereinrichtung (2) betätigbar sind, der im Einzelnen jeweils über Sensormittel verfügt und mit einer Hauptsteuereinheit (3) in Verbindung steht.

3. Elektromechanische Linearstelleinheit nach Anspruch 2, **dadurch gekennzeichnet, dass** die-Sensormittel jeweils durch je einen Linearsensor (15A, 15B) zur Detektion einer linearen Position einer Spindelstange (11A, 11B) des je zugehörigen Spindeltriebes (10A, 10B) und je einen Rotationssensor (14A, 14B) zur Erfassung einer Winkelposition des je zugehörigen elektrischen Antriebs (6A, 6B) gebildet sind.

4. Elektromechanische Linearstelleinheit nach Anspruch 2 oder 3, **dadurch gekennzeichnet, dass** jeder Steuerzweig (4A, 4B) durch eine ACU (18A, 18B) und eine PCU (21A, 21B) gebildet ist, wobei die jeweilige ACU (18A, 18B) den zugehörigen elektrischen Antrieb (6A, 6B) und den jeweiligen Spindeltrieb (10A, 10B) mittels der Sensormittel überwacht, während die jeweilige PCU (21A, 21B) den je zugehörigen elektrischen Antrieb (6A, 6B) und die jeweilige Bremse (13A, 13B) nach Vorgaben der zugehörigen ACU (18A, 18B) ansteuert.

5. Elektromechanische Linearstelleinheit nach einem der vorhergehenden Ansprüche, **dadurch gekennzeichnet, dass** die jeweils zugeordnete Bremse (13A, 13B) im unbestromten Zustand die Stellbewegung des jeweiligen Spindeltriebes (10A, 10B) unterbindet.

6. Verfahren zum Betreiben einer elektromechanischen Linearstelleinheit nach einem der Ansprüche 2 bis 5, **dadurch gekennzeichnet, dass** innerhalb der Steuerzweige (4A, 4B) Messdaten der je zugehörigen Sensormittel verglichen, sowie leistungsführende Bauteile überwacht werden, wobei im Falle einer Fehlerdetektion die jeweils zugeordnete Bremse (13A, 13B) betätigt wird.

7. Verfahren nach Anspruch 6, **dadurch gekennzeichnet, dass** im Falle der Fehlerdetektion durch die Hauptsteuereinheit (3) modifizierte Regelvorgaben an die noch fehlerfrei arbeitenden Steuerzweige (4A; 4B) übermittelt werden, um trotzdem eine geforderte Relativverstellung der Steuerstange (12) zu erzielen.

8. Computerprogrammprodukt für eine elektromechanische Linearstelleinheit nach einem der Ansprüche 1 bis 5, welches zum Ausführen des Verfahrens nach einem der Ansprüche 6 oder 7 eingerichtet ist, wobei die Routine zum Vergleichen der Messdaten der Sensormittel und zur Überwachung leistungsführender Bauteile, sowie zur Betätigung der jeweiligen Bremse (13A, 13B) im Falle der Fehlerdetektion durch entsprechende, in einer Software hinterlegte Steuerungsbefehle umgesetzt ist.

9. Datenträger mit einem Computerprogrammprodukt nach Anspruch 8.

## Claims

1. Electromechanical linear adjustment unit, comprising an actuator housing (5) which accommodates at least two electric drives (6A, 6B) which each, when operated by means of a control device (2), mutually independently set a respectively associated drive means of a respective spindle drive (10A, 10B) in rotation and thus effect in each case a linear adjustment movement of the respective spindle drive (10A, 10B) in order to initiate a linear relative adjustment of a control rod (12), wherein the at least two electric drives (6A, 6B) are positioned in the actuator housing (5) such that the relative adjustment can be generated by way of simultaneous operation of the at least two electric drives (6A, 6B) and a sum of the adjustment movements of the associated spindle drives (10A, 10B) or by way of operation of a single electric drive (6A; 6B) and the adjustment movement of the respectively associated spindle drive (10A; 10B), wherein, in the region of each of the at least two electric drives (6A, 6B), there is provided in each case one brake (13A, 13B) which can be operated in targeted fashion by means of the control device (2) and thus prevents the adjustment movement of the respectively associated spindle drive (10A, 10B), **characterized in that** the at least two electric drives (6A, 6B) have in each case one electric motor (7A, 7B), each of which electric motors, when operated by means of the control device (2), by way of a respectively associated drive shaft (8A, 8B), sets an associated spindle nut (9A, 9B) of the respective spindle drive (10A, 10B) in rotation, wherein the respectively associated brake (13A, 13B), when operated, immobilizes the associated drive shaft (8A, 8B).

2. Electromechanical linear adjustment unit according to Claim 1, **characterized in that** the at least two electric drives (6A, 6B) can be operated individually by means of a respectively associated control branch (4A, 4B) of the control device (2), which control branch individually has respective sensor means and is connected to a main control unit (3).

3. Electromechanical linear adjustment unit according to Claim 2, **characterized in that** the sensor means are each formed by a respective linear sensor (15A, 15B) for the detection of a linear position of a spindle rod (11A, 11B) of the respectively associated spindle drive (10A, 10B) and by a respective rotation sensor (14A, 14B) for the detection of an angular position of the respectively associated electric drive (6A, 6B).

4. Electromechanical linear adjustment unit according to Claim 2 or 3, **characterized in that** each control branch (4A, 4B) is formed by an ACU (18A, 18B) and a PCU (21A, 21B), wherein the respective ACU (18A, 18B) monitors the associated electric drive (6A, 6B) and the respective spindle drive (10A, 10B) by way of the sensor means, whereas the respective PCU (21A, 21B) activates the respectively associated electric drive (6A, 6B) and the respective brake (13A, 13B) in a manner governed by the associated ACU (18A, 18B).

5. Electromechanical linear adjustment unit according to one of the preceding claims, **characterized in that** the respectively associated brake (13A, 13B), when deenergized, prevents the adjustment movement of the respective spindle drive (10A, 10B).

6. Method for operating an electromechanical linear adjustment unit according to one of Claims 2 to 5, **characterized in that**, within the control branches (4A, 4B), measurement data of the respectively associated sensor means are compared and power-transmitting components are monitored, wherein, in the event of a fault being detected, the respectively associated brake (13A, 13B) is operated.

7. Method according to Claim 6, **characterized in that**, in the event of a fault being detected, the main control unit (3) transmits modified regulation presets to the control branches (4A; 4B) that are still operating without faults, in order to nevertheless realize a demanded relative adjustment of the control rod (12).

8. Computer program product for an electromechanical linear adjustment unit according to one of Claims 1 to 5, said computer program product being set up for executing the method according to either of Claims 6 and 7, wherein the routine for comparing the measurement data of the sensor means and for monitoring power-transmitting components, and for actuating the respective brake (13A, 13B) in the event of a fault being detected, is implemented by way of corresponding control commands stored in an item of software.

9. Data carrier having a computer program product according to Claim 8.

## Revendications

1. Unité électromécanique d'ajustement linéaire comprenant un boîtier d'actionneur (5) qui reprend au moins deux entraînements électriques (6A, 6B) qui, indépendamment l'un de l'autre et lorsqu'ils sont actionnés par un dispositif de commande (2), mettent en rotation un moyen d'entraînement respectif d'une transmission à broche respective (10A, 10B) et entraînent ainsi un déplacement linéaire d'ajustement de la transmission à broche (10A, 10B) pour établir un ajustement linéaire relatif d'une tringle de commande (12),
les deux ou plusieurs entraînements électriques (6A, 6B) étant placés dans le boîtier d'actionneur (5) de telle sorte que l'ajustement relatif puisse être établi par un actionnement simultané des deux ou plusieurs entraînements électriques (6A, 6B) et d'une somme des déplacements d'ajustement des entraînements à broche (10A, 10B) associés ou par actionnement d'un seul entraînement électrique (6A; 6B) et déplacement d'ajustement de l'entraînement à broche (10A; 10B) associé,
un frein (13A, 13B) qui peut être actionné de manière contrôlée par le dispositif de commande (2) et empêche ainsi le déplacement d'ajustement de l'entraînement à broche (10A, 10B) associé étant prévu au niveau de chacun des deux ou plusieurs entraînements (6A, 6B),
**caractérisée en ce que**
les deux ou plusieurs entraînements électriques (6A, 6B) présentent chacun un moteur électrique (7A, 7B) qui, lors de l'actionnement par un dispositif de commande (2), mettent chacun en rotation un écrou de broche (9A, 9B) associé de chaque entraînement à broche (10A, 10B) par l'intermédiaire d'un arbre d'entraînement (8A, 8B) associé, le frein (13A, 13B) associé bloquant l'arbre d'entraînement (8A, 8B) associé lors de l'actionnement.

2. Unité électromécanique d'ajustement linéaire selon la revendication 1, **caractérisée en ce que** les deux ou plusieurs entraînements électriques (6A, 6B) peuvent être actionnés en particulier par une branche associée de commande (4A, 4B) du dispositif de commande (2), qui dispose en particulier d'un moyen de capteur et est en liaison avec une unité principale de commande (3).

3. Unité électromécanique d'ajustement linéaire selon la revendication 2, **caractérisée en ce que** les moyens de capteur sont chacun formé d'un capteur linéaire (15A, 15B) qui détecte la position linéaire d'une tringle de broche (11A, 11B) de l'entraînement à broche (10A, 10B) associé et d'un capteur de rotation (14A, 14B) qui détecte la position angulaire de l'entraînement électrique (6A, 6B) associé.

4. Unité électromécanique d'ajustement linéaire selon les revendications 2 ou 3, **caractérisée en ce que** chaque branche de commande (4A, 4B) est formée d'un ACU (18A, 18B) et d'un PCU (21A, 21B), chaque ACU (18A, 18B) surveillant l'entraînement électrique (6A, 6B) associé et l'entraînement à broche (10A, 10B) associé au moyen des moyens de capteur, tandis que les PCU (21A, 21B) commandent chacun l'entraînement électrique (6A, 6B) associé et les freins (13A, 13B) associés selon ce que prescrit l'ACU (18A, 18B) associé.

5. Unité électromécanique d'ajustement linéaire selon l'une des revendications précédentes, **caractérisée en ce que** les freins associés (13A, 13B) empêchent en situation non alimentée en courant le déplacement d'ajustement de chaque entraînement à broche (10A, 10B).

6. Procédé de conduite d'une unité électromécanique d'ajustement linéaire selon l'une des revendications 2 à 5, **caractérisé en ce qu'**à l'intérieur des branches de commande (4A, 4B), des données de mesure des moyens de capteur associés sont comparées et des composants de transmission de puissance sont surveillés, les freins (13A, 13B) associés étant actionnés en cas de détection d'un défaut.

7. Procédé selon la revendication 6, **caractérisé en ce qu'**en cas de détection d'un défaut par l'unité principale de commande (3), des prescriptions modifiées de régulation sont transmises à la branche de commande (4A; 4B) qui travaille encore sans défaut, pour obtenir malgré cela l'ajustement relatif des tringles de commande (12) qui est imposé.

8. Produit de programme informatique pour unité électromécanique d'ajustement linéaire selon l'une des revendications 1 à 5, le produit étant conçu pour mettre en oeuvre le procédé selon l'une des revendications 6 ou 7, la routine de comparaison des données de mesure des moyens de capteur et de surveillance des composants de transmission de puissance ainsi que d'actionnement des freins (13A, 13B) en cas de détection d'un défaut étant convertie en ordres de commande appropriés conservés en mémoire dans un logiciel.

9. Support de données présentant un produit de programme informatique selon la revendication 8.
